# EUROPÄISCHE PATENTSCHRIFT

(11) **EP 1 910 461 B1**
(45) Veröffentlichungstag und Bekanntmachung des Hinweises auf die Patenterteilung: **05.11.2008**
(21) Anmeldenummer: 06754594.7
(22) Anmeldetag: 27.06.2006
(51) Int. Cl.: C08K 9/04, C08K 9/06, C08K 3/22, C08K 3/34, C08K 3/36, C09D 5/44, C09D 7/12

(54) **LACKE ENTHALTEND PARTIKEL**
PAINTS COMPRISING PARTICLES
PEINTURE CONTENANT DES PARTICULES

(30) Priorität: 22.07.2005 DE 102005034350
(43) Veröffentlichungstag der Anmeldung: 16.04.2008
(73) Patentinhaber: Wacker Chemie AG, 81737 München (DE)
(72) Erfinder: BRIEHN, Christoph, 81369 München (DE); STANJEK, Volker, 81477 München (DE); PFEIFFER, Jürgen, 84489 Burghausen (DE); GOTTSCHALK-GAUDIG, Torsten, 84561 Mehring (DE)
(74) Vertreter: Fritz, Helmut
(86) Internationale Anmeldenummer: PCT/EP2006/006207
(87) Internationale Veröffentlichungsnummer: WO 2007/009557

(56) Entgegenhaltungen:
- EP-A- 0 768 351
- EP-A- 0 832 947
- WO-A-03/044099
- DE-A1- 10 326 538
- DE-A1- 19 933 098

## Beschreibung

Die Erfindung betrifft Beschichtungsformulierungen, die Partikel enthalten, welche auf ihrer Oberfläche über isocyanatreaktive Gruppen verfügen, und deren Verwendung als Lacke.

Partikel - insbesondere Nanopartikel - enthaltende Beschichtungssysteme sind Stand der Technik. Entsprechende Beschichtungen sind beispielsweise in EP 1 249 470, WO 03/16370, US 20030194550 oder US 20030162015 beschrieben. Die Partikel führen dabei zu einer Verbesserung der Eigenschaften der entsprechenden Beschichtungen, insbesondere hinsichtlich ihrer Kratzfestigkeit sowie gegebenenfalls auch ihrer Chemikalienbeständigkeit.

Ein häufig auftretendes Problem beim Einsatz der - in der Regel anorganischen - Partikel in organischen Beschichtungssystemen besteht in einer meist unzureichenden Verträglichkeit von Partikel und Lackmatrix. Dies kann dazu führen, dass sich die Teilchen nicht hinreichend gut in einer Lackmatrix dispergieren lassen. Zudem können sich selbst gut dispergierte Partikel bei längeren Stand- oder Lagerzeiten absetzen, wobei sich gegebenenfalls größere Aggregate bzw. Agglomerate ausbilden, die sich auch bei einer Redispergierung nicht bzw. nur schlecht in die ursprünglichen Teilchen auftrennen lassen. Die Verarbeitung von solchen inhomogenen Systemen ist in jedem Falle äußerst schwierig, oftmals sogar unmöglich. Lacke, die nach ihrer Auftragung und Härtung über glatte Oberflächen verfügen, lassen sich auf diesem Weg in der Regel nicht oder nur nach kostenintensiven Verfahren herstellen.

Günstig ist daher der Einsatz von Partikeln, die auf ihrer Oberfläche über organische Gruppen verfügen, welche zu einer besseren Verträglichkeit mit der Lackmatrix führen. Auf diese Weise wird das anorganische Partikel durch eine organische Hülle "maskiert". Besonders günstige Lackeigenschaften können dabei erreicht werden, wenn die organischen Funktionen auf den Partikeloberflächen zudem auch noch gegenüber der Lackmatrix reaktiv sind, so dass sie unter den jeweiligen Härtungsbedingungen des entsprechenden Lackes mit der Matrix reagieren können. So gelingt es, die Partikel während der Lackhärtung chemisch in die Matrix einzubauen, was oftmals besonders gute mechanische Eigenschaften aber auch eine verbesserte Chemikalienbeständigkeit zur Folge hat. Derartige Systeme sind beispielsweise in DE 102 47 359 A1, EP 832 947 A oder EP 0 872 500 A1 beschrieben. Nachteilig an den hier beschriebenen Systemen sind die in der Regel relativ hohen Anteile der vergleichsweise teuren Nanopartikel am Gesamtfeststoffgehalt des Lackes.

Des Weiteren ist auch der Einsatz von Beschichtungen bekannt, die ein mit Nanopartikeln modifiziertes Bindemittel enthalten. Diese können hergestellt werden, indem man die mit einer reaktiven Funktionalität ausgestatteten Partikel mit einem Bindemittel mit einer komplementären Funktion umsetzt. D.h. hier wird das organofunktionelle Partikel nicht erst bei der Lackhärtung sondern bereits bei der Bindemittelherstellung chemisch in die Lackmatrix eingebaut. Derartige Systeme sind beispielsweise in EP 1 187 885 A oder WO 01/05897 beschrieben. Sie besitzen jedoch den Nachteil, in ihrer Herstellung relativ aufwendig zu sein, was zu hohen Herstellungskosten führt.

Bei einem besonders wichtigen Lacktyp wird ein Lackharz aus hydroxyfunktionellen Prepolymeren, insbesondere aus hydroxyfunktionellen Polyacrylaten und/oder Polyestern, eingesetzt, die bei der Lackhärtung mit einem isocyanatfunktionellen Härter (Polyurethanlacke) und/oder einem Melaminhärter (Melaminlacke) zur Reaktion gebracht werden. Die Polyurethanlacke zeichnen sich durch besonders gute Eigenschaften aus. So besitzen Polyurethanlacke vor allem eine überlegene Chemikalienbeständigkeit, während die Melaminlacke in der Regel über bessere Kratzfestigkeiten verfügen. Typischerweise werden diese Lacktypen in besonders hochwertigen und anspruchsvollen Anwendungsgebieten verwendet, beispielsweise als Klar- bzw. Decklacke für OEM-Lackierungen in der Automobil- und Fahrzeugindustrie. Ebenso bestehen auch die meisten Decklacke für Automobilreparaturen aus derartigen Systemen. Die Schichtdicken dieser Lacke liegen typischerweise in Bereichen von 20 bis 50 µm.

Bei den Polyurethan-Lacksystemen unterscheidet man generell zwischen den sogenannten 2K- und 1K-Systemen. Erstere bestehen aus zwei Komponenten, von denen eine im Wesentlichen aus dem Isocyanathärter besteht, während das Lackharz mit seinen isocyanatreaktiven Gruppen in der zweiten Komponente enthalten ist. Beide Komponenten müssen dabei getrennt gelagert und transportiert werden und dürfen erst kurz vor der Verarbeitung vermischt werden, da die fertige Mischung nur eine stark eingeschränkte Topfzeit besitzt. Oftmals günstiger sind daher die sogenannten 1K-Systeme, die nur aus einer Komponente bestehen, in der neben dem Lackharz ein Härter mit geschützten Isocyanatgruppen vorliegt. 1K-Lacke werden thermisch gehärtet, wobei die Schutzgruppen der Isocyanateinheiten abgespalten werden und die entschützten Isocyanate anschließend mit dem Lackharz reagieren können. Typische Einbrenntemperaturen von derartigen 1K-Lacken liegen bei 120 - 160°C. Bei Melaminlacken handelt es sich in der Regel um 1K-Lacke, die Einbrenntemperaturen liegen typischerweise in einem vergleichbaren Temperaturbereich.

Insbesondere bei diesen hochwertigen Lacken wäre eine weitere Eigenschaftsverbesserung wünschenswert. Dies gilt insbesondere für Fahrzeug-Decklackierungen. So ist vor allem die erreichbare Kratzfestigkeit von herkömmlichen Autolacken noch nicht hinreichend, so dass es z. B. in der Waschstraße durch Partikel im Waschwasser zu einer merklichen Verkratzung des Lackes kommt. Auf Dauer wird dadurch der Glanz des Lackes nachhaltig geschädigt. Hier wären Formulierungen wünschenswert, mit denen sich bessere Kratzfestigkeiten erreichen lassen.

Ein besonders vorteilhafter Weg zur Lösung dieser Aufgabe ist die Verwendung von Partikeln, die auf ihrer Oberfläche Organofunktionen aufweisen, die gegenüber dem Lackharz oder aber gegenüber dem Härter reaktiv sind. Zudem führen diese Organofunktionen auf der Partikeloberfläche zu einer Maskierung der Partikel und verbessern so die Verträglichkeit von Partikel und Lackmatrix.

Derartige Partikel mit geeigneten Organofunktionen sind prinzipiell bereits bekannt. Sie sind, ebenso wie ihr Einsatz in Beschichtungen, beispielsweise in EP 0 768 351, EP 0 832 947, EP 0 872 500 oder DE 10247359 beschrieben.

Tatsächlich lässt sich die Kratzfestigkeit von Lacken durch den Einbau von derartigen Partikeln merklich steigern. Allerdings werden bei sämtlichen im Stand der Technik beschriebenen Verfahren beim Einsatz dieser Partikel noch keine optimalen Ergebnisse erzielt. Insbesondere weisen die entsprechenden Beschichtungen dermaßen hohe Partikelgehalte auf, dass eine Verwendung derartiger Lacke in großen Serienlackierungen schon allein aus Kostengründen nur schwer realisierbar sein wird.

In WO 01/09231 werden partikelhaltige Lacksysteme beschrieben, die dadurch gekennzeichnet sind, dass sich in einem Oberflächensegment des Lackes mehr Partikel befinden als in einem Bulksegment. Vorteil dieser Partikelverteilung ist die vergleichsweise geringe Partikelkonzentration, die für eine deutliche Verbesserung der Kratzfestigkeit benötigt wird. Die gewünschte hohe Affinität der Partikel zur Lackoberfläche wird dabei erreicht, indem man auf die Partikeloberflächen ein Siliconharz als oberflächenaktives Agens aufbringt. Die so erhältlichen modifizierten Partikel besitzen - für Silicone oftmals typisch -eine relativ niedrige Oberflächenenergie. Infolgedessen ordnen sie sich bevorzugt an der Oberfläche der Lackmatrix an. Nachteilig an diesem Verfahren ist allerdings die Tatsache, dass nicht nur die Siliconharzmodifizierung der Partikel, sondern auch die Herstellung der dafür benötigten Siliconharze selbst technisch aufwendig ist. Letzteres ist insbesondere deshalb problematisch, weil es für das Erreichen einer guten Kratzfestigkeit notwendig ist, die Siliconharze mit Organofunktionen, z. B. Carbinolfunktionen, zu versehen, über die die entsprechend modifizierten Partikel bei der Lackhärtung chemisch in den Lack eingebaut werden können. Derartig funktionalisierte Siliconharze sind kommerziell nicht bzw. nur sehr eingeschränkt verfügbar. Vor allem aber ist auch die Auswahl der überhaupt möglichen Organofunktionen bei diesem System relativ begrenzt. Daher werden bei diesem System, wie auch bei sämtlichen weiteren Systemen entsprechend des Standes der Technik, noch keine optimalen Ergebnisse erzielt.

Aufgabe der Erfindung war daher die Entwicklung eines Lacksystems, das die Nachteile entsprechend des Standes der Technik überwindet.

Gegenstand der Erfindung sind Beschichtungsformulierungen (B), die enthalten
a) 20 - 90 Gew.-%, bezogen auf den Feststoffanteil, eines hydroxylgruppen-funktionellen Lackharzes (L),
b) 1 - 90 Gew.-%, bezogen auf den Feststoffanteil, eines Lackhärters (H), der freie und/oder geschützte Isocyanatgruppen enthält, die bei thermischer Behandlung unter Abspaltung einer Schutzgruppe eine Isocyanatfunktion freisetzen,
c) 0,05 - 40 Gew.-%, bezogen auf den Feststoffanteil, an Partikeln (P), die auf ihrer Oberfläche über isocyanatreaktive Funktionen verfügen, wobei mehr als 50 % der reaktiven Funktionen der Partikel (P) über eine höhere Reaktivität gegenüber Isocyanaten verfügen, als mindestens 60 % der Hydroxylgruppen des Lackharzes (L) und
d) 0 - 90 Gew.-%, bezogen auf die gesamte Beschichtungsformulierung (B), eines Lösungsmittels oder eines Lösungsmittelgemisches.

Der Feststoffanteil umfasst dabei diejenigen Komponenten der Beschichtungsformulierungen (B), die bei der Lackhärtung im Lack verbleiben.

Der Erfindung liegt die Entdeckung zugrunde, dass die Beschichtungen, hergestellt aus den erfindungsgemäßen Beschichtungsformulierungen (B), in denen die isocyanatreaktiven Gruppen der Partikel (P) mehrheitlich eine höhere Reaktivität aufweisen als die Mehrheit der Hydroxylgruppen des Lackharzes (L), bessere Kratzfestigkeiten aufweisen als entsprechende Beschichtungen, in denen die Partikel (P) und das Lackharz (L) über isocyanatreaktive Funktionen mit weitgehend identischer Reaktivität verfügen.

Eine höhere Reaktivität der isocyanatreaktiven Gruppen der Partikel (P) liegt vor, wenn die Partikel (P) ausschließlich oder mehrheitlich über primäre kohlenstoffgebundene Hydroxylfunktionen verfügen, während das hydroxylgruppen-funktionelle Lackharz (L) ausschließlich oder mehrheitlich über sekundäre Hydroxylgruppen verfügt. Ebenso liegt eine höhere Reaktivität der isocyanatreaktiven Gruppen der Partikel (P) vor, wenn die Partikel (P) ausschließlich oder mehrheitlich über kohlenstoffgebundene Aminfunktionen oder Thiolfunktionen verfügen, während das hydroxylgruppen-funktionelle Lackharz (L) ausschließlich oder mehrheitlich über Hydroxylgruppen verfügt. Besonders bevorzugt werden dabei Partikel (P) mit aliphatischen Aminfunktionen verwendet, da letztere eine besonders hohe Reaktivität gegenüber Isocyanaten aufweisen.

Bevorzugt werden Beschichtungsformulierungen (B) enthaltend Partikel (P), deren isocyanatreaktive Gruppen zu mindestens 70 %, besonders bevorzugt zu mindestens 90 %, gegenüber Isocyanaten über eine höhere Reaktivität verfügen, als mindestens 60 % der Hydroxylgruppen des Lackharzes (L). Ebenso werden Lackharze (L) bevorzugt, deren isocyanatreaktive Gruppen nicht nur zu 60 %, sondern zu mindestens 70 %, besonders bevorzugt zu mindestens 90 %, über eine niedrigere Reaktivität gegenüber Isocyanaten verfügen als die isocyanatreaktiven Funktionen der Partikel (P).

Besonders bevorzugt weisen sämtliche isocyanatreaktive Gruppen der Partikel (P) in der Beschichtungsformulierung (B) eine höhere Reaktivität gegenüber Isocyanaten auf als sämtliche isocyanatreaktive Gruppen des Lackharzes (L).

Vorzugsweise enthalten die Beschichtungsformulierungen (B) neben dem Lackhärter (H) 0 - 50 Gew.-% bezogen auf den Feststoffanteil, eines oder mehrerer weiter Lackhärter (H1).

Die Beschichtungsformulierungen (B) werden bevorzugt als Klar- und/oder Decklacke eingesetzt, insbesondere für Automobil-OEM- oder Automobil-Reparaturlackierungen.

In einer bevorzugten Ausführungsform der Erfindung enthalten Beschichtungsformulierungen (B)
a) 30 - 80 Gew.-%, bezogen auf den Feststoffanteil, eines hydroxylgruppen-funktionellen Lackharzes (L),
b) 10 - 60 Gew.-%, bezogen auf den Feststoffanteil, eines Lackhärters (H),
c) 0,1 - 30 Gew.-%, bezogen auf den Feststoffanteil, an Partikeln (P),
d) 0 - 40 Gew.-% bezogen auf den Feststoffanteil, eines oder mehrerer weiter Lackhärter (H1) und
e) 10 - 70 Gew.-%, bezogen auf die gesamte Beschichtungsformulierung (B), eines oder mehrerer Lösungsmittel.

Besonders bevorzugt enthalten die Beschichtungsformulierungen (B)
a) 40 - 70 Gew.-%, bezogen auf den Feststoffanteil, eines hydroxylgruppen-funktionelles Lackharzes (L),
b) 15 - 50 Gew.-%, bezogen auf den Feststoffanteil, eines Lackhärters (H),
c) 0,5 - 15 Gew.-%, bezogen auf den Feststoffanteil, an Partikeln (P),
d) 0 - 30 Gew.-% bezogen auf den Feststoffanteil, eines oder mehrerer weiter Lackhärter (H1) und
e) 10 - 70 Gew.-%, bezogen auf die gesamte Beschichtungsformulierung (B), eines oder mehrerer Lösungsmittel.

Bevorzugt liegt der Anteil des oder der Lösungsmittel an der gesamten Beschichtungsformulierung (B) bei 10 bis 60 Gew.-%, besonders bevorzugt bei 10 - 40 Gew.-%.

Der Gehalt an Partikeln (P) liegt bevorzugt bei 0,1 - 40 Gew.-%,- bezogen auf den Feststoffanteil, besonders bevorzugt bei 0,2 - 20 Gew.-% bzw. bei 0,2 - 10 Gew.-%. In ganz besonders vorteilhaften Ausführungsformen der Erfindung liegt der Gehalt an Partikeln (P) bei 0,5 - 5 Gew.-%, bezogen auf den Feststoffanteil, insbesondere bei 0,7 - 3 Gew.-%.

Das Lackharz (L), Partikel (P), Lackhärter (H) und - falls vorhanden - Lackhärter (H1) besitzen bevorzugt hinreichend viele reaktive Gruppen, dass sich bei der Härtung der Beschichtungsformulierung (B) ein dreidimensional vernetztes Polymernetzwerk ausbilden kann.

In einer bevorzugten Ausführungsform der Erfindung sind die Partikel (P) erhältlich durch eine Umsetzung von Partikeln (P1), die aus Atomen, die ausgewählt werden aus Metall-, Silicium- und Sauerstoffatomen, oder aus Siliconharzen bestehen und über freie Hydroxylfunktionen verfügen, mit Organosilanen (A), die aus den allgemeinen Formel (I) und (II)

(R¹O)₃₋ₙ(R²)ₙSi-A-X (I)

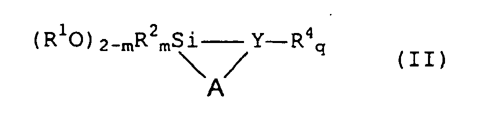

ausgewählt werden, wobei
- R¹: Wasserstoff, Alkyl-, Cycloalkyl- oder Arylreste mit jeweils 1 bis 6 C-Atomen, wobei die Kohlenstoffkette durch nicht
- **R²**: Alkyl-, Cycloalkyl-, Aryl- oder Arylalkylreste mit jeweils 1 bis 12 C Atomen wobei die Kohlenstoffkette durch nicht benachbarte Sauerstoff-, Schwefel- oder NR³-Gruppen unterbrochen sein kann,
- **R⁴**: Wasserstoff oder einen Alkylrest mit 1 - 10 Kohlenstoffatomen,
- **A**: einen zweibindigen, gegebenenfalls substituierten Alkyl-, Cycloalkyl- oder Arylrest mit 1-10 Kohlenstoffatomen, der gegebenenfalls durch Sauerstoff-, Schwefel- oder **NR³-**Gruppen unterbrochen sein kann,
- **X**: eine Hydroxyl- oder Thiolfunktion, eine Gruppe der Formel **NHR⁷**, einen heterocyclischen Ring enthaltend eine NH-Funktion oder einen Epoxidring,
- **Y**: eine Organofunktion, die nach der Spaltung der Si-Y-Bindung eine Hydroxyl- oder Thiolfunktion oder eine Gruppe der Formel **NHR⁷** darstellt,
- **R³, R⁷**: Wasserstoff, Alkyl-, Cycloalkyl-, Aryl-, Arylalkyl-, Aminoalkyl- oder Aspartatesterreste bedeuten und,
- **n**: die Werte 0, 1 oder 2,
- **m**: die Werte 0, 1 oder 2 und
- **q**: die Werte 0 oder 1 annehmen können.

Bei den Organosilanen (A) sind die Gruppen **R¹** vorzugsweise Methyl- oder Ethylreste. Die Gruppen **R²** stellen bevorzugt Alkylreste mit 1 - 6 Kohlenstoffatomen oder Phenylreste, insbesondere Methyl-, Ethyl- oder Isopropylreste, dar. **R³** weist vorzugsweise höchstens 10 Kohlenstoffatome, insbesondere höchstens 4 Kohlenstoffatome auf. **R⁴** stellt bevorzugt Wasserstoff oder einen Alkylrest mit 1 - 6 Kohlenstoffatomen dar, insbesondere Methyl- oder Ethylreste. Bei **A** handelt es sich bevorzugt um einen zweibindigen Alkylrest mit 1 - 6 Kohlenstoffatomen, der gegebenenfalls durch Sauerstoff-, Schwefel- oder **NR³**-Gruppen unterbrochen sein kann. Besonders bevorzugt stellt **A** eine (CH₂)₃-Gruppe oder eine CH₂-Gruppe dar.
**R⁷** weist die Bedeutungen von **R³** auf. Stellt **X** dabei einen Epoxidring dar, so wird dieser vor, während oder nach der Reaktion des Silans (A) mit den Partikel (P1) durch ein geeignetes Verfahren, z. B. durch eine Reaktion mit Ammoniak, einem Amin, Wasser oder einem Alkohol bzw. einem Alkoholat, geöffnet.
Werden bei der Herstellung der Partikel (P) Silane (A) der allgemeinen Formel (II) eingesetzt, so wird die Ringstruktur dieses Silans während der Partikelherstellung durch den Angriff einer Hydroxylgruppe der Partikel (P1) auf das Siliciumatom des Silans (A) unter Spaltung der Si-Y-Bindung geöffnet. Bei Y handelt es sich dabei um eine Funktion, die nach dieser Spaltung der Si-Y-Bindung eine Hydroxyl- oder Thiolfunktion oder eine Gruppe der Formel NHR⁷ darstellt.

Besonders bevorzugt werden dabei Organosilane (A) eingesetzt, die den allgemeinen Formeln (III) oder (IIIa) entsprechen 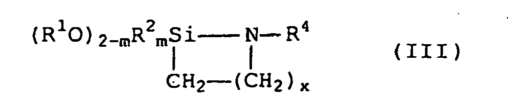 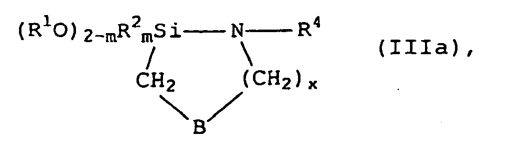 wobei
- ein Sauerstoffatom, ein Schwefelatom, eine Carbonylgruppe, eine Estergruppe, eine Amidgruppe oder eine **NR⁸**-Gruppe darstellt,
- **R⁸**: die Bedeutungen von **R³** aufweist,
- **x**: die Werte von 0 bis 10 annehmen kann
und die übrigen Variablen die bei den allgemeinen Formeln (I) und (II) angegebenen Bedeutungen aufweisen.

Ganz besonders bevorzugt werden als Organosilane (A) Verbindungen der allgemeinen Formeln (IV) oder (V) verwendet 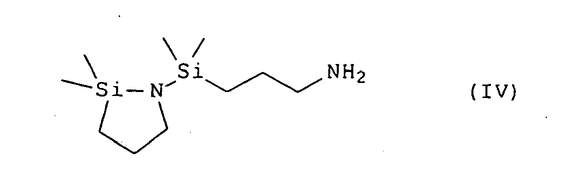 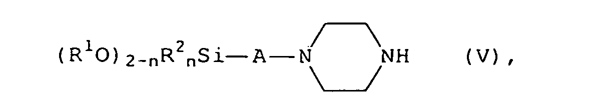 wobei sämtliche Variablen die oben angegebenen Bedeutungen aufweisen.

Bei der Herstellung der Partikel (P) können zur Oberflächenmodifizierung der Partikel (P1) neben den Organosilanen (A) auch beliebige Gemische der Silane (A) mit anderen Silanen (S1), Silazanen (S2) oder Siloxanen (S3) eingesetzt werden. Die Silane (S1) verfügen dabei entweder über Hydroxysilylgruppen oder aber über hydrolysierbare Silylfunktionen, wobei letztere bevorzugt werden. Daneben können diese Silane über weitere Organofunktionen verfügen, es können aber auch Silane (S1) ohne weitere Organofunktionen verwendet werden. Als Silazane (S2) bzw. Siloxane (S3) werden besonders bevorzugt Hexamethyldisilazan bzw. Hexamethyldisiloxan eingesetzt. Bevorzugt liegt der gewichtsmäßige Anteil der Silane (A) an der Gesamtmenge, die aus den Silanen (A) und (S1), Silazanen (S2) und Siloxanen (S3) gebildet wird, bei mindestens 50 Gew.-%, besonders bevorzugt bei mindestens 70 Gew.-% bzw. 90 Gew.-%. In einer weiteren besonders bevorzugten Ausführungsform der Erfindung wird auf den Einsatz der Verbindungen (S1), (S2) und (S3) vollständig verzichtet.

Als Partikel (P1) können sämtliche Metalloxid- und Metallmischoxid-Partikel (z.B. Aluminiumoxide wie Korund, Aluminiummischoxide mit anderen Metallen und/oder Silicium, Titanoxide, Zirkonoxide, Eisenoxide), Siliciumoxid-Partikel (z.B. pyrogene Kieselsäure, gefällte Kieselsäure, kolloidale Kieselsäure) oder Siliciumoxid-Verbindungen, bei denen einige Valenzen des Siliciums mit organischen Resten versehen sind, d.h. Siliconharze, eingesetzt werden. Diese Partikel (P1) zeichnen sich dadurch aus, daß sie auf ihrer Oberfläche über Metall- und/oder Siliciumhydroxid-Funktionen verfügen, über die eine Reaktion mit den Organosilanen (A) - sowie gegebenenfalls den Silanen (S1), Silazanen (S2) oder Siloxanen (S3) - erfolgen kann. Die Partikel (P1) besitzen vorzugsweise einen mittleren Durchmesser von 1 nm bis 100 µm, bevorzugt von 10 nm bis 500 nm, besonders bevorzugt von 10 nm bis 200 nm. Die mittleren Partikeldurchmesser können dabei beispielsweise mittels TEM-Aufnahmen oder auch als hydrodynamische Äquivalenzdurchmesser mittels Photonen-Korrelations-Spektroskopie bestimmt werden.

In einer bevorzugten Ausführungsform der Erfindung wird bei der Herstellung der Partikel (P) von Partikel (P1) ausgegangen, die aus kolloidalen Silicium- oder Metalloxiden bestehen, welche im allgemeinen als Dispersion der entsprechenden Oxidteilchen von Submikrongröße in einem wässrigen oder nichtwässrigen Lösungsmittel vorliegen. Dabei können unter anderem die Oxide der Metalle Aluminium, Titan, Zirkonium, Tantal, Wolfram, Hafnium oder Zinn verwendet werden. Besonders bevorzugt werden organische Lösungen kolloidaler Kieselsole eingesetzt. Hierbei handelt es sich im allgemeinen um eine Dispersion von Siliciumdioxid-Teilchen in einem wässrigen oder nichtwässrigen Lösungsmittel. In der Regel handelt es sich bei den Kieselsolen um 1 - 50 Gew.-%ige Lösungen, bevorzugt um 20 - 40 Gew.-%ige Lösungen. Derartige Sole sind kommerziell verfügbar und werden von zahlreichen Herstellern vertrieben (z. B. DuPont, Nalco Chemical Company, Nissan Chemicals etc). Typische Lösungsmittel sind dabei neben Wasser vor allem Alkohole, insbesondere Alkohole mit 1 bis 6 Kohlenstoffatomen, - häufig Isopropanol aber auch andere, meist niedermolekulare Alkohole, wie z. B. Methanol, Ethanol, n-Propanol, n-Butanol, Isobutanol und t-Butanol. Ebenso sind auch Organosole in polaren aprotischen Lösungsmittel, wie z. B. Methylethylketon, oder aromatische Lösungsmittel, wie z. B. Toluol, verfügbar. Die mittlere Teilchengröße der Siliciumdioxidpartikel (P1) liegt im Allgemeinen bei 1 - 100 nm, bevorzugt bei 5 - 50 nm, besonders bevorzugt bei 8 - 30 nm.

Die Herstellung der Partikel (P) aus kolloidalen Silicium- oder Metalloxiden kann nach verschiedenen Verfahren erfolgen. Bevorzugt erfolgt sie jedoch durch Zugabe der Silane (A) - gegebenenfalls in einem Lösungsmittel und/oder in Mischungen mit anderen Silanen (S1), Silazanen (S2) oder Siloxanen (S3) - zum wässrigen oder organischen Sol. Dieses Sol ist gegebenenfalls sauer, z. B. durch Salzsäure oder Trifluoressigsäure, oder basisch, z. B. durch Ammoniak, stabilisiert. Die Reaktion erfolgt in der Regel bei Temperaturen von 0 - 200°C, bevorzugt bei 20 - 80°C und besonders bevorzugt bei 20 - 60°C. Die Reaktionszeiten liegen typischerweise bei 5 Min. bis 48 h, bevorzugt bei 1 bis 24 h. Wahlweise können auch noch saure, basische oder schwermetallhaltige Katalysatoren zugesetzt werden. Bevorzugt werden diese in Spuren < 1000 ppm einsetzt. Besonders bevorzugt wird jedoch auf den Zusatz von gesonderten Katalysatoren verzichtet.

Da kolloidale Silicium- oder Metalloxidsole oftmals in wässriger oder alkoholischer Dispersion vorliegen, kann es vorteilhaft sein, das bzw. die Lösungsmittel während oder nach der Herstellung der Partikel (P) gegen ein anderes Lösungsmittel bzw. gegen ein anderes Lösungsmittelgemisch auszutauschen. Dies kann beispielsweise durch destillatives Entfernen des ursprünglichen Lösungsmittels geschehen, wobei das neue Lösungsmittel bzw. Lösungsmittelgemisch in einem oder auch in mehreren Schritten vor, während oder auch erst nach der Destillation zugegeben werden kann. Geeignete Lösungsmittel können dabei beispielsweise Wasser, aromatische oder aliphatische Alkohole, wobei aliphatische Alkohole, insbesondere aliphatische Alkohole mit 1 bis 6 Kohlenstoffatomen (z. B. Methanol, Ethanol, *n*-Propanol, Isopropanol, *n*-Butanol, Isobutanol, *t*-Butanol, die verschiedenen Regioisomere des Pentanols und Hexanols) bevorzugt werden, Ester (z. B. Etylacetat, Propylacetat, Butylacetat, Butyldiglycolacetat, Methoxypropylacetat), Ketone (z. B. Aceton, Metylethylketon), Ether (z. B. Diethylether, t-Butylmethylether, THF), aromatische Lösungsmittel (Toluol, die verschiedenen Regioisomere des Xylols aber auch Mischungen wie Solvent Naphta), Lactone (z. B. Butyrolacton etc.) oder Lactame (z. B. *N*-Methylpyrrolidon) darstellen. Dabei werden aprotische Lösungsmittel bzw. Lösungsmittelgemische, die ausschließlich oder aber zumindest teilweise aus aprotischen Lösungsmitteln bestehen, bevorzugt. Aprotische Lösungsmittel haben den Vorteil, dass eventuelle während der Lackhärtung im Lack verbleibende Lösungsmittelreste nach der Abspaltung der Schutzgruppen gegenüber den freigesetzten Isocyanatfunktionen nicht reaktiv sind. Neben der Herstellung einer Partikeldispersion ist auch eine Isolierung der Partikel (P) als Feststoff vorstellbar.

Ebenfalls bevorzugt werden bei der Herstellung der Partikel (P) zudem Siliconharze der allgemeinen Formel (VI)

(R⁵₃SiO_{1/2})ₑ(R⁵₂SiO_{2/2})_{f}(R⁵SiO_{3/2})_{g}(SiO_{4/2})ₕ (VI)

als Partikel (P1) eingesetzt, wobei
- **R⁵**: eine OR¹-Funktion, eine OH-Funktion, einen gegebenenfalls halogen-, hydroxyl-, amino-, phosphonato-, carbamato-, epoxy-, thiol-, (meth)acryl-, oder auch NCO-substituierten Kohlenwasserstoffrest mit 1 - 18 Kohlenstoffatomen,
- **e**: einen Wert von größer oder gleich 0,
- **f**: einen Wert von größer oder gleich 0,
- **g**: einen Wert von größer oder gleich 0,
- **h**: einen Wert von größer oder gleich 0 bedeuten und die Summe aus **e + f + g + h** mindestens einen Wert von mindestens 1, vorzugsweise mindestens 5, bedeutet.

Vorzugsweise sind mindestens 70 mol-% aller Reste **R⁵** Methyl-, Ethyl-, Isopropyl- oder Phenylreste.
In einer bevorzugten Ausführungsform weist bei den Siliconharzen der allgemeinen Formel (VI) die Summe aus **e + h** mindestens 90 mol-% der Summe aus **e + f + g + h** auf.

Die Herstellung der Partikel (P) aus Siliconharzen der allgemeinen Formel (VI) und Silanen (A) kann über die oben beschriebenen Verfahren erfolgen.

Bei einem weiteren bevorzugten Verfahren zur Herstellung der Partikel (P) wird nicht von hydroxylgruppenhaltigen Partikeln (P1) ausgegangen. Stattdessen werden die Partikel (P) über eine Cohydrolyse der Organosilane (A) mit anderen Silanen (S4) hergestellt. Als Silane (S4) können dabei sämtliche hydrolysierbaren Silane sowie hydroxysilylgruppenhaltigen Silane eingesetzt werden. Ebenso können auch Siloxane oder Silazane zum Einsatz kommen. Bevorzugt werden dabei Silane der allgemeinen Formel (III) eingesetzt. Typische Beispiele für geeignete Silane (S4) sind Tetraethoxysilan, Tetramethoxysilan, Methyltrimethoxysilan, Phenyltrimethoxysilan, Methyltriethoxysilan, Phenyltriethoxysilan, Dimethyldimethoxysilan, Dimethyldiethoxysilan, Trimethylmethoxysilan oder Trimethylethoxysilan. Selbstverständlich können auch verschiedene Mischungen aus verschiedenen Silanen (S4) eingesetzt werden. Dabei können sowohl Mischungen verwendet werden, die neben den Silanen (A) nur Silane (S4) ohne zusätzliche Organofunktionen enthalten, als auch Mischungen, die neben den Silanen (A) auch Silane (S4) ohne zusätzliche Organofunktion und Silane (S4) mit zusätzlicher Organofunktion enthalten. Bei der Herstellung der Partikel (P) über eine Cohydrolyse können die verschiedenen Silane gemeinsam als auch sukzessive zugegeben werden. Ein weiteres Verfahren zur Herstellung der Partikel (P) besteht in einer Äquilibrierung von Organopolysiloxanharzen mit den Silanen (A). Sowohl die Cohydrolyse als auch die Äquilibrierung kann dabei in Gegenwart von Katalysatoren durchgeführt werden. Die prinzipiellen Verfahren der Cohydrolyse und Äquilibrierung zur Herstellung von Harzen sind in der Literatur vielfach beschrieben.

In einem weiteren bevorzugten Verfahren wird zur Herstellung der Partikel (P) von Partikel (P1) ausgegangen, die aus pyrogener Kieselsäure bestehen. D. h. Kieselsäure, die in einer Flammenreaktion aus Organosiliciumverbindungen hergestellt wird, z. B. aus Siliciumtetrachlorid oder Methyltrichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z. B. in einer Wasserstoff-SauerstoffFlamme, oder auch einer Kohlenmonoxid-Sauerstoffflamme, hergestellt wird.

Die unmodifizierte pyrogene Kieselsäure (P1) hat eine spezifische BET-Oberfläche, gemessen gemäß DIN EN ISO 9277 / DIN 66132 von 10 m²/g bis 600 m²/g, bevorzugt von 50 m²/g bis 400 m²/g.

Vorzugsweise weist die unmodifizierte pyrogene Kieselsäure eine Dichte an Oberflächen-Silanolgruppen SiOH von kleiner als 2,5 SiOH/nm², vorzugsweise kleiner 2,1 SiOH/nm², bevorzugt von kleiner als 2 SiOH/nm², besonders bevorzugt von 1,7 bis 1,9 SiOH/nm² auf, bestimmt gemäß einer Methode wie gegeben in G.W. Sears, Anal. Chem. 28 (1956) 1981.

Vorzugsweise weist die unmodifizierte pyrogene Kieselsäure eine Stampfdichte gemessen gemäß DIN EN ISO 787-11 von 10 g/l bis 500 g/l, bevorzugt von 20 g/l bis 200 g/l und besonders bevorzugt von 30 g/l bis 100 g/l auf.

Die Herstellung der Partikel (P) aus pyrogener Kieselsäure kann nach verschiedenen Verfahren erfolgen.

In einem bevorzugten Verfahren wird die trockene pulverförmige pyrogene Kieselsäure direkt mit den feinstverteilten Silanen (A) - gegebenenfalls in Mischungen mit anderen Silanen (S1), Silazanen (S2) oder Siloxanen (S3) - umgesetzt.

Das Verfahren kann kontinuierlich oder diskontinuierlich durchgeführt werden und aus einem oder mehreren Schritten aufgebaut sein. Bevorzugt wird die modifizierte pyrogene Kieselsäure mittels eines Verfahren hergestellt, bei dem der Herstellungsprozess in getrennten Schritten erfolgt: (A) zunächst Herstellung der hydrophilen pyrogenen Kieselsäure, (B) Modifizierung der hydrophilen pyrogenen Kieselsäure mit (1) Beladung der hydrophilen pyrogenen Kieselsäure mit Silanen (A), (2) Reaktion der pyrogenen Kieselsäure mit den aufgebrachten Verbindungen und (3) Reinigung der pyrogenen Kieselsäure von überschüssig aufgebrachten Verbindungen und Abspaltungsprodukten.

Die Oberflächenbehandlung wird bevorzugt durchgeführt in einer Atmosphäre mit weniger als 10 Vol.-% Sauerstoff, besonders bevorzugt weniger als 2,5 Vol.-%, beste Ergebnisse werden erzielt bei weniger als 1 Vol.-% Sauerstoff.

Belegung, Reaktion und Reinigung können als diskontinuierlicher oder kontinuierlicher Prozess durchgeführt werden.

Die Belegung (Schritt B1) erfolgt bei Temperaturen von -30 bis 250°C, bevorzugt 20 bis 150°C, besonders bevorzugt 20 bis 80°C; in einer speziellen Ausführungsform erfolgt der Belegungsschritt bei 30 bis 50°C.
Die Verweilzeit beträgt 1 Min. bis 24 h, bevorzugt 15 Min. bis 240 Min., aus Gründen der Raumzeitausbeute besonders bevorzugt 15 Min. bis 90 Min.
Der Druck in der Belegung reicht von schwachem Unterdruck bis 0,2 bar bis zum Überdruck von 100 bar, wobei aus technischen Gründen Normaldruck, das heißt druckfreies Arbeiten gegenüber Außen-/Atmosphären-Druck, bevorzugt ist.

Die Silane A bzw. deren Mischungen werden bevorzugt in flüssiger Form zugefügt und insbesondere dem pulverförmigen Metalloxid zugemischt. Die Verbindungen können dabei in reiner Form oder als Lösungen in bekannten technisch eingesetzten Lösungsmitteln, wie z. B. Alkoholen, wie z. B. Methanol, Ethanol, oder Isopropanol, Ethern, wie z. B. Diethylether, THF, oder Dioxan, oder Kohlenwasserstoffen, wie z. B. Hexanen oder Toluol, zugemischt werden. Die Konzentration in der Lösung beträgt dabei 5 - 95 Gew.-%, bevorzugt 30 - 95 Gew.-%, besonders bevorzugt 50 - 95 Gew.-%.
Das Zumischen geschieht vorzugsweise durch Düsentechniken oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2 - 20 bar), Feinstverteilen mit Atomizern oder Gas-Feststoff-Austauschaggregaten mit beweglichen, rotierenden oder statischen Einbauten, die eine homogene Verteilung der Silane (A) mit der pulverförmigen pyrogenen Kieselsäure erlauben.
Bevorzugt werden die Silane (A) als feinstverteiltes Aerosol zugefügt, wobei das Aerosol eine Sinkgeschwindigkeit von 0,1 - 20 cm/s aufweist.
Bevorzugt erfolgt die Beladung der Kieselsäure und die Reaktion mit den Silanen A unter mechanischer oder gasgetragener Fluidisierung. Besonders bevorzugt ist die mechanische Fluidisierung.
Eine Gas-getragene Fluidisierung kann durch alle inerten Gase erfolgen wie vorzugsweise N₂, Ar, andere Edelgase, CO₂, etc.
Die Zuführung der Gase zur Fluidisierung erfolgt bevorzugt im Bereich von Leerrohrgasgeschwindigkeiten von 0,05 bis 5 cm/s, besonders bevorzugt von 0,5 - 2,5 cm/s.

Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

Die Reaktion erfolgt bevorzugt bei Temperaturen 40 bis 200 °C, bevorzugt 40-160 °C und besonders bevorzugt bei 80 bis 150 °C. Die Reaktionszeit beträgt 5 Min bis 48 h, vorzugsweise 10 Min bis 4 h.

Gegebenenfalls können protische Lösungsmittel hinzugefügt werden, wie flüssige oder verdampfbare Alkohole oder Wasser; typische Alkohole sind Isopropanol, Ethanol und Methanol. Es können auch Gemische der oben genannten protischen Lösungsmittel zugefügt werden. Vorzugsweise werden 1 bis 50 Gew.-% an protischen Lösungsmittel bezogen auf die Metalloxide zugefügt, besonders bevorzugt 5 bis 25 %. Besonders bevorzugt ist Wasser.
Wahlweise können saure Katalysatoren, von saurem Charakter im Sinne einer Lewis Säure oder einer Brönsted Säure, wie Chlorwasserstoff oder basische Katalysatoren, von basischem Charakter im Sinne einer Lewis Base oder einer Brönsted Base, wie Ammoniak oder Amine, wie Triethylamin, zugesetzt werden. Bevorzugt werden diese in Spuren zugesetzt, d. h. kleiner als 1000 ppm. Besonders bevorzugt werden keine Katalysatoren zugesetzt.

Die Abreinigung erfolgt vorzugsweise bei einer Reinigungstemperatur von 20 bis 200°C, bevorzugt 50°C bis 180°C, besonders bevorzugt von 50 bis 150°C. Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.
Der Reinigungsschritt kann weiterhin durch erhöhten Gaseintrag gekennzeichnet sein, entsprechend einer Leerrohrgasgeschwindigkeit von vorzugsweise 0,001 bis 10 cm/s, bevorzugt 0,01 bis 1 cm/s. Dies kann durch alle inerten Gase erfolgen, wie vorzugsweise N₂, Ar, andere Edelgase, CO₂, etc.

Zusätzlich können während der Modifizierung oder im Anschluss an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Modifizierung, im Schritt B2 der Reaktion durch Presswalzen, oben genannte Mahlaggregate, wie Kugelmühlen, oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung der Kieselsäure eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Reinigung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

In einem weiteren bevorzugten Verfahren werden Dispersionen der hydrophilen pyrogenen Kieselsäure in Wasser oder typischen industriell eingesetzten Lösungsmitteln, wie Alkoholen, wie Methanol, Ethanol, Isopropanol, wie Ketonen, wie Aceton, Methyl-Ethyl-Keton, wie Ethern, wie Diethylether, THF, Kohlenwasserstoffen, wie Pentan, Hexanen, Aromaten, wie Toluol, oder anderen flüchtigen Lösungsmitteln, wie Hexamethyldisiloxan, oder deren Mischungen mit Silanen (A) umgesetzt.

Das Verfahren kann kontinuierlich oder diskontinuierlich durchgeführt werden und aus einem oder mehreren Schritten aufgebaut sein. Bevorzugt ist ein kontinuierliches Verfahren. Bevorzugt wird die modifizierte pyrogene Kieselsäure mittels eines Verfahren hergestellt, bei dem die Kieselsäure (1) in einem der oben genannten Lösungsmittel eingemischt wird, (2) mit den Silanen (A) zur Reaktion gebracht wird, und (3) von Lösungsmitteln, überschüssigen Silanen und Nebenprodukten befreit wird.

Die Dispergierung (1), Reaktion (2) und Trocknung (3) werden bevorzugt durchgeführt in einer Atmosphäre mit weniger als 10 Vol.-% Sauerstoff, besonders bevorzugt weniger als 2,5 Vol.-%, beste Ergebnisse werden erzielt bei weniger als 1 Vol.-% Sauerstoff.
Das Einmischen (1) kann mittels üblicher Mischaggregate, wie Ankerrührer oder Balkenrührer, erfolgen. Gegebenenfalls kann das Einmischen unter hoher Scherung mittels Dissolvern, Rotor-Stator-Aggregaten, gegebenenfalls unter direkter Zudosierung in den Scherspalt, mittels Ultraschallgebern oder mittels Mahlaggregaten, wie Kugelmühlen, erfolgen. Gegebenenfalls können verschiedene der oben genannten Aggregate parallel oder nacheinander eingesetzt werden.
Zur Reaktion (2) der Silane (A) mit der Kieselsäure werden die Silane in reiner Form oder als Lösung in geeigneten Lösungsmitteln der Kieselsäuredispersion zugegeben und homogen vermischt. Die Zugabe der Silane (A) kann dabei in dem Behälter, der zur Herstellung der Dispersion eingesetzt wird oder in einem separaten Reaktionsbehälter erfolgen. Werden die Silane im Dispergierbehälter zugefügt, kann dies parallel zur oder nach Abschluss der Dispergierung erfolgen. Gegebenenfalls können die Silane (A) gelöst im Dispergiermedium direkt im Dispergierschritt zugefügt werden.
Gegebenenfalls wird der Reaktionsmischung Wasser zugefügt. Gegebenenfalls werden der Reaktionsmischung saure Katalysatoren, wie Brönsted-Säuren wie flüssige oder gasförmige HCl, Schwefelsäure, Phosphorsäure oder Essigsäure, oder basische Katalysatoren, wie Brönsted-Basen, wie flüssiger oder gasförmiger Ammoniak, Amine wie NEt₃ oder NaOH, zugefügt.
Der Reaktionsschritt wird bei einer Temperatur von 0°C bis 200°C, bevorzugt 10°C bis 180°C und besonders bevorzugt von 20°C bis 150°C durchgeführt.

Das Entfernen von Lösungsmitteln, überschüssigen Silanen (A) und Nebenprodukten (3) kann mittels Trocknern oder durch Sprühtrocknen erfolgen. Gegebenenfalls kann an den Trocknungsschritt noch ein Temperschritt zur Vervollständigung der Reaktion angeschlossen sein.

Zusätzlich können im Anschluss an die Trocknung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

In einer weiteren besonders bevorzugten Verfahrensweise werden im Anschluss an die Trocknung Verfahren zur mechanischen Verdichtung der Kieselsäure eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Trocknung Verfahren zur Desagglomerierung der Kieselsäure eingesetzt werden, wie Stiftmühlen, Hammermühlen, Gegenstrommühlen, Prallmühlen oder Vorrichtungen zur Mahlsichtung.

Bei einer besonders vorteilhaften Ausführung der Erfindung werden bei der Herstellung der Partikel (P) Silane (A) der allgemeinen Formel (I) oder (V), bei denen der Spacer A für eine CH₂-Brücke steht, oder aber cyclische Silane der Formeln (III), (IIIa) oder (IV) eingesetzt. Diese Silane zeichnen sich durch eine besonders hohe Reaktivität gegenüber den Hydroxylgruppen der Partikel (P1) aus, so dass die Funktionalisierung der Partikel besonders schnell und bei niedrigen Temperaturen, insbesondere bereits bei Raumtemperatur durchgeführt werden kann.

Werden dabei Silane (A) eingesetzt, die nur über monofunktionelle Silylfunktionen verfügen, d. h. Silane der allgemeinen Formeln (I), (II), (III), (IIIa), (IV) oder (V) mit n bzw. m = 2, so kann bei der Herstellung der Partikel (P) auf die Zugabe von Wasser verzichtet werden, da die Monoalkoxysilylgruppen bzw. die reaktiven cyclischenen Silane direkt mit den Hydroxylfunktionen auf der Oberfläche der Partikel (P1) reagieren können. Werden hingegen Silane (A) mit di- oder trifunktionellen Silylgruppen eingesetzt (d. h. Silane der allgemeinen Formeln ((I), (II), (III), (IIIa), (IV), (IVa) oder (VI) mit n bzw = 0 oder 1), so ist die Gegenwart bzw. Zugabe von Wasser bei der Herstellung der Partikel (P) oftmals vorteilhaft, da die Alkoxysilane dann nicht nur mit den Si-OH-Funktionen der Partikel (P1), sondern - nach ihrer Hydrolyse - auch miteinander reagieren können. Dabei entstehen Partikel (P), die über eine Hülle aus miteinander vernetzten Silanen (A) verfügen.

Die in den erfindungsgemäßen Beschichtungsformulierungen (B) enthaltenen Lackharze (L) bestehen bevorzugt aus hydroxylgruppen-haltigen Prepolymeren, besonders bevorzugt aus hydroxylgruppen-haltigen Polyacrylaten oder Polyestern. Derartige für die Lackherstellung geeignete hydroxylgruppenhaltige Polyacrylate und Polyester sind dem Fachmann hinlänglich bekannt und in der einschlägigen Literatur vielfach beschrieben. Sie werden von zahlreichen Herstellern hergestellt und kommerziell vertrieben.

Bei den Beschichtungsformulierungen (B) kann es sich um 1-komponentige (1K) oder auch um 2-komponentige (2K) Lacke handeln. Im ersten Fall werden als Lackhärter (H) Verbindungen eingesetzt, die über geschützte Isocyanatgruppen verfügen. Im zweiten Fall werden als Lackhärter (H) Verbindungen mit freien Isocyanatgruppen verwendet.

Sowohl in 1K- als auch in 2K-Lacken werden als Isocyanate gängige Di- und/oder Polyisocyanate eingesetzt, die gegebenenfalls zuvor mit den jeweiligen Schutzgruppen versehen worden sind. Dabei werden prinzipiell sämtliche gebräuchliche Isocyanate eingesetzt, wie sie in der Literatur vielfach beschrieben sind. Gängige Diisocyanate sind beispielsweise Diisocyanatodiphenylmethan (MDI), sowohl in Form von rohem oder technischem MDI als auch in Form reiner 4,4'- bzw. 2,4'-Isomeren oder deren Mischungen, Tolylendiisocyanat (TDI) in Form seiner verschiedenen Regioisomere, Diisocyanatonaphthalin (NDI), Isophorondiisocyanat (IPDL), perhydriertes MDI (H-MDI), Tetramethylendiisocyanat, 2-Methyl-pentamethylendiisocyanat, 2,2,4-Trimethylhexamethylendiisocyanat, Dodecamethylendiisocyanat, 1,4-Diisocyanatocyclohexan, 1,3-Diisocyanato-4-methylcyclohexan oder auch Hexamethylendiisocyanat (HDI). Beispiele für Polyisocyanate sind polymeres MDI (P-MDI), Triphenylmethantriisocyanat sowie auch sämtliche Isocyanurat- oder Biuret-Trimerisate der oben aufgeführten Diisocyanate. Daneben können auch weitere Oligomere der oben genannten Isocyanate mit blockierten NCO-Gruppen eingesetzt werden. Sämtliche Di- und/oder Polyisocyanate können einzeln oder auch in Mischungen eingesetzt werden. Bevorzugt werden dabei die Isocyanurat- und Biuret-Trimerisate der - vergleichsweise UV-stabilen - aliphatischen Isocyanate, besonders bevorzugt die Trimerisate von HDI und IPDI, verwendet.

Werden als Lackhärter (H) Isocyanate mit geschützten Isocyanatgruppen eingesetzt, so werden Schutzgruppen bevorzugt, die bei Temperaturen von 80 bis 200°C, besonders bevorzugt bei 100 bis 170°C abgespalten werden. Als Schutzgruppen können sekundäre oder tertiäre Alkohole, wie Isopropanol oder t-Butanol, CH-acide Verbindungen, wie z. B. Malonsäurediethylester, Acetylaceton, Acetessigsäureethylester, Oxime, wie z. B. Formaldoxim, Acetaldoxim, Butanoxim, Cyclohexanonoxim, Acetophenonoxim, Benzophenonoxim oder Diethylenglyoxim, Lactame, wie z. B. Caprolactam, Valerolactam, Butyrolactam, Phenole, wie Phenol, o-Methylphenol, *N*-Alkylamide, wie z. B. N-Methylacetamid, Imide, wie Phthalimid, sekundäre Amine, wie z. B. Diisopropylamin, Imidazol, 2-Isopropylimidazol, Pyrazol, 3,5-Dimethylpryazol, 1,2,4-Triazol und 2,5 Dimethyl-1,2,4-triazol eingesetzt werden. Vorzugsweise werden dabei Schutzgruppen wie Butanoxim, 3,5-Dimethylpyrazol, Caprolactam, Malonsäurediethylester, Malonsäuredimethylester, Acetessigester, Diisopropylamin, Pyrrolidon, 1,2,4-Triazol, Imidazol und 2-Isopropylimidazol verwendet. Besonders bevorzugt werden Schutzgruppen eingesetzt, die eine niedrige Einbrenntemperatur ermöglichen, wie z. B. Malonsäurediethylester, Malonsäuredimethylester, Butanoxim, Diisopropylamin, 3,5-Dimethylpyrazol und 2-Isopropylimidazol.

Das Verhältnis an - gegebenenfalls blockierten - Isocyanatgruppen zu den isocyanatreaktiven Gruppen von Lackharz (L) und Partikeln (P) liegt in den erfindungsgemäßen Beschichtungsformulierung (B) üblicherweise bei 0,5 bis 2, bevorzugt bei 0,8 bis 1,5 und besonders bevorzugt bei 1,0 bis 1,2.

Sofern es sich bei den Beschichtungsformulierung (B) um 1K-Lacke handelt, kann der Lackhärter (H) mit geschützten Isocyanatgruppen auch in Kombination mit weiteren Lackhärtern (H1) eingesetzt werden. Diese Einsatzmengen dieses zusätzlichen Lackhärter (H1) liegen insbesondere bei 0 - 50 Gew.-%, bevorzugt bei 0 - 40 Gew.-% und besonders bei 0 - 30 Gew.-% bezogen auf den Feststoffanteil. Bei den Lackhärtern (H1) handelt es sich bevorzugt um Verbindungen, die bei den Einbrenntemperaturen eines 1K-Lackes von bevorzugt 100 - 200°C mit dem Lackharz und gegebenenfalls auch mit den Partikeln (P) Additions- oder Kondensationsreaktionen eingehen können. Besonders bevorzugt handelt es sich um Melamin-FormaldehydHarze und/oder um Tris(aminocarbony)triazine.

Des Weiteren können die Beschichtungsformulierungen (B) auch noch die gängigen Lösungsmittel sowie die in Lackformulierungen üblichen Additive und Lackkomponenten als weitere Komponente enthalten. Zu nennen wären hier u. a. Verlaufshilfsmittel, oberflächenaktive Substanzen, Haftvermittler, Lichtschutzmittel wie UV-Absorber und/oder Radikalfänger, Thixotropiermittel sowie weitere Feststoffe. Zur Erzeugung der jeweils gewünschten Eigenschaftsprofile sowohl der Beschichtungsformulierungen (B) als auch der ausgehärteten Lacke sind derartige Zusätze in der Regel unverzichtbar. Ebenso können die Beschichtungsformulierungen (B) auch Pigmente enthalten.

Bei einem bevorzugten Verfahren werden die erfindungsgemäßen Beschichtungsformulierungen (B) hergestellt, indem die Partikel (P) während des Mischprozesses als Pulver oder als Dispersion in einem geeigneten Lösungsmittel zugesetzt werden. Daneben wird aber noch ein weiteres Verfahren bevorzugt, bei dem aus den Partikeln (P) und einer oder mehreren Lackkomponenten zunächst ein Masterbatch hergestellt wird, mit Partikelkonzentrationen > 15 Gew.-%, bevorzugt > 25 Gew.-% und besonders bevorzugt > 30 Gew.-%. Bei der Herstellung der erfindungsgemäßen Beschichtungsformulierungen (B) wird dieses Masterbatch dann mit den übrigen Lackkomponenten vermischt. Wird bei der Herstellung des Masterbatches von einer Partikeldispersion ausgegangen, so kann es vorteilhaft sein, wenn das Lösungsmittel der Partikeldispersion im Verlauf der Masterbatchherstellung entfernt wird, z. B. über einen Destillationsschritt, oder aber gegen ein anderes Lösungsmittel bzw. Lösungsmittelgemisch ausgetauscht wird.

Mit den erfindungsgemäßen Beschichtungsformulierungen (B) können beliebige Substrate zur Verbesserung der Kratzfestigkeit, Abriebbeständigkeit oder Chemikalienbeständigkeit beschichtet werden. Bevorzugte Substrate sind Kunststoffe wie Polycarbonat, Polybutylenterephthalat, Polymethylmethacrylat, Polystyrol oder Polyvinylchlorid sowie in einem vorgelagerten Schritt aufgebrachte Basislacke.

Besonders bevorzugt dienen die aus erfindungsgemäßen Beschichtungsformulierungen (B) hergestellten Beschichtungen als kratzfeste Klar- oder Decklacke, insbesondere in der Fahrzeugindustrie. Das Aufbringen der Beschichtungsformulierungen (B) kann durch beliebige Verfahren wie Eintauch-, Sprüh-, und Gießverfahren erfolgen. Auch ein Aufbringen der Beschichtungsformulierung (B) auf einem Basecoat nach einem "wet in wet"-Verfahren ist möglich. Die Aushärtung erfolgt in der Regel durch Erwärmen unter den jeweils erforderlichen Bedingungen (2K Lacke typischerweise bei 0 - 100°C, bevorzugt bei 20 - 80°C, 1K-Lacke bei 100 - 200°C bevorzugt bei 120 - 160°C). Selbstverständlich kann die Lackhärtung durch den Zusatz von geeigneten Katalysatoren beschleunigt werden. Als Katalysatoren eignen sich dabei insbesondere saure, basische sowie auch schwermetallhaltige Verbindungen.

Alle Symbole der vorstehenden Formeln weisen ihre Bedeutungen jeweils unabhängig voneinander auf. In allen Formeln ist das Siliciumatom vierwertig.

Soweit nicht anders angegeben,sind alle Mengen- und Prozentangaben auf das Gewicht bezogen, alle Drücke 0,10 MPa (abs.) und alle Temperaturen 20°C.

### Beispiele:

### Synthesebeispiel 1: Herstellung eines Silans (Silan 1) mit einer sekundären Carbinolfunktion durch Umsetzung von Glycidoxypropyltrimethoxysilan mit Lithiummethanolat

Ein Gemisch bestehend aus 5,00 g (22,7 mmol). 3-Glycidoxypropyltrimethoxysilan und 22,7 mmol Lithiummethanolat (2 M in Methanol) wird 5 h zum Rückfluss erhitzt. Dabei bildet sich ausschließlich ein Silan mit sekundärer Hydroxylfunktion. Nach Abkühlen auf Raumtemperatur wird die Mischung mit 0,20 g Ionenaustauscher (Amberlyst 15) versetzt, für 30 Min. bei Raumtemperatur gerührt, der Ionenaustauscher abfiltriert und darauf das Lösungsmittel abdestilliert. Man erhält 5,22 g eines farblosen Öls.

### Synthesebeispiel 2: Herstellung von N-Butyl-1,1-dimethyl-1-sila-2-azacyclopentan (Silan 2).

Zu einer Vorlage von 508 g (6,94 mol) 1-Butylamin werden innerhalb von 2,5 h 171 g (1,00 mol) Chlorpropyldimethylchlorsilan zugetropft und das Gemisch wird für 12 h unter Rückfluss erhitzt. Nach dem Abdestillieren des überschüssigen 1-Butylamins wird der Rückstand mit 350 ml Toluol verdünnt und auf 10°C abgekühlt. Der sich bildende Niederschlag wird abfiltriert und das Filtrat im Vakuum destilliert. Man erhält 134,5 g N-Butyl-1,1-dimethyl-1-sila-2-azacyclopentan.

### Synthesebeispiel 3: Herstellung von N-Triethoxysilylmethylpiperazin (Silan 3).

905,3 g (10,5 mol) Piperazin und 945 ml Xylol (wasserfrei) als Lösungsmittel werden in einem 4 Liter 4-Hals-Kolben vorgelegt und anschließend mit Stickstoff inertisiert. Man heizt auf eine Temperatur von 100°C auf, wobei sich das Piperazin vollständig löst. Bei dieser Temperatur tropft man 446,3 g (2,1 mol) Chlormethyl-triethoxysilan innerhalb von 1 h unter gutem Rühren zu. Dabei fällt nach der Zugabe von ca. 1/3 der Silanmenge Piperazin-hydrochlorid als Salz aus, jedoch bleibt die Suspension bis zum Ende der Reaktion gut rührbar. Nach Beendigung der Zugabe rührt man für weiteren 15 Min. nach. Anschließend wird das Reaktionsgemisch auf 110°C aufgeheizt und das ausgefallene Salz über einen vorgeheizten Filter abfiltriert.
Man kühlt auf ca. 5°C ab und filtriert den bei dieser Temperatur ausgefallenen Piperazinüberschuss ab. Anschließend destilliert man das Lösungsmittel ab, wobei eventuelle, noch vorhandene Piperazinreste ebenfalls entfernt werden. Das so erhaltene Rohprodukt wird destillativ gereinigt (84 - 86°C bei 0,1 mbar). Es wird eine Ausbeute von 357,5 g (1,36 mol), d. h. ca. 65 % bezogen auf die eingesetzte Silanmenge, erreicht.

### Synthesebeispiel 4: Herstellung von SiO₂-Nanosol-Partikeln mit sekundären Carbinolfunktionen

Bei einer Temperatur von 25°C werden zu 3,50 g eines SiO₂-Organosols (IPA-ST^{®} der Firma Nissan Chemicals, 30,5 Gew.-% SiO₂ in Isopropanol, mittlere Teilchengröße 12 nm), 13,5 g Isopropanol, 0,03 g Wasser sowie 0,10 g (0,40 mmol) Silan 0 gegeben. Man rührt für 24 h bei Raumtemperatur, wobei man eine weitgehend klare Suspension erhält, die einen schwachen Tyndall-Effekt zeigt. Sie weist einen Festgehalt von 6,71 Gew.-%, einen SiO₂-Gehalt von 6,23 Gew.-%, und einen OH-Gruppengehalt von 0,023 mmol/g auf.

### Synthesebeispiel 5: Herstellung von aminoalkylfunktionellen SiO₂-Nanosol-Partikeln

Zu 11,0 g eines verdünnten Kieselsols, das durch Zugabe von 7,5 g Isopropanol zu 3,5 g des Kieselsols IPA-ST^{®} der Firma Nissan Chemicals (30,5 Gew. -% SiO₂ in Isopropanol, mittlere Teilchengröße 12 nm) erhalten worden ist, wird eine Lösung von 0,085 g des in Synthesebeispiel 2 beschriebenen Silans 2 in 0,4 g Ethanol zügig zugetropft und das Reaktionsgemisch für 1 h bei Raumtemperatur gerührt. Das modifizierte Kieselsol, das einen leichten Tyndall-Effekt zeigt, weist einen Festgehalt von 10,0 Gew.-%, einen SiO₂-Gehalt von 9,3 Gew.-% und einen NH-Gruppengehalt von 0,04 mmol/g auf.

### Synthesebeispiel 6: Herstellung von aminoalkylfunktionellen SiO₂-Nanosol-Partikeln

Zu 11,0 g eines verdünnten Kieselsols, das durch Zugabe von 7,5 g Isopropanol zu 3,5 g des Kieselsols IPA-ST^{®} der Firma Nissan Chemicals (30,5 Gew.-% SiO₂ in Isopropanol, mittlere Teilchengröße 12 nm) erhalten worden ist, wird eine Lösung von 0,095 g des in Synthesebeispiel 3 beschriebenen Silans 3 in 0,4 g Ethanol zügig getropft und das Reaktionsgemisch für 1 h bei Raumtemperatur gerührt. Das modifizierte Kieselsol, das einen leichten Tyndall-Effekt zeigte, weist einen Festgehalt von 9,7 Gew.-%, einen SiO₂-Gehalt von 9,3 Gew.-% und einen Amingehalt von 0,03 mmol/g auf.

### Synthesebeispiel 7: Herstellung von aminoalkylfunktionellen pyrogenen Kieselsäure-Partikeln

Bei einer Temperatur von 25°C unter Inertgas N₂ werden zu 100 g an hydrophiler KIESELSÄURE, mit einer Feuchte < 1 % und einem HCl Gehalt < 100 ppm und mit einer spezifischen Oberfläche von 300 m²/g (gemessen nach der BET Methode nach DIN 66131 und 66132) (erhältlich unter dem Namen WACKER^{®} HDK T30 bei Wacker-Chemie GmbH, München, D), durch Verdüsen über eine Einstoffdüse (Druck 5 bar), 5 g Wasser und 48 g Aminopropyltrimethoxysilan zugefügt. Die so beladene KIESELSÄURE wird bei einer Verweilzeit von 0,25 Stunden bei einer Temperatur von 25°C weiter mittels Rühren fluidisiert, und anschließend bei 80°C in einem 100 1 Trockenschrank unter N₂ bei einer Verweilzeit von 2 h zur Reaktion gebracht.
Erhalten wird ein weißes Kieselsäure-Pulver mit homogener Silyliermittelschicht.

### Synthesebeispiel 8: Herstellung von aminoalkylfunktionellen pyrogenen Kieselsäure-Partikeln in Dispersion

In einem 21-Dreihalskolben mit KPG-Rührer, Tropftrichter und Rückflusskühler werden unter N₂ zu einer Mischung von 880 ml Aceton und 220 ml Wasser 100 g einer hydrophilen KIESELSÄURE, mit einer Feuchte < 1 % und einem HCl Gehalt < 100 ppm und mit einer spezifischen Oberfläche von 300 m²/g (gemessen nach der BET Methode nach DIN 66131 und 66132) (erhältlich unter dem Namen WACKER^{®} HDK T30 bei Wacker-Chemie GmbH, München, D) zugegeben. Die Mischung wird unter Rühren zum Sieden erhitzt und 48 g Aminopropyltrimethoxysilan langsam zugetropft. Die erhaltene Reaktionsmischung wird noch 2 h unter Rückfluss erhitzt und anschließend alle flüchtigen Anteile an einem Rotationsverdampfer entfernt. Der weiße pulverförmige Rückstand wird anschließend bei 80°C in einem 100 1 Trockenschrank unter N₂ bei einer Verweilzeit von 2 h erhitzt.
Erhalten wird ein weißes Kieselsäure-Pulver mit homogener Silyliermittelschicht.

### Vergleichsbeispiel 1 und 2: Herstellung von 1K-Beschichtungsformulierungen enthaltend SiO₂-Nanosol-Partikel, die mit sekundären Carbinolfunktionen modifiziert worden sind (nicht erfindungsgemäß)

Zur Herstellung einer Beschichtungsformulierung wird ein acrylatbasierendes Lackpolyol mit einem Festgehalt von 52,4 Gew.-% (Lösemittel: Solvent Naphta, Methoxypropylacetat (10:1)), einem Hydroxylgruppengehalt von 1,46 mmol/g Harzlösung und einer Säurezahl von 10 - 15 mg KOH/g mit Desmodur® BL 3175 SN der Fa. Bayer (butanoxim-blockiertes Polyisocyanat, blockierter NCO-Gehalt von 2,64 mmol/g) vermischt. Die dabei eingesetzten Mengen der jeweiligen Komponenten können der Tabelle 1 entnommen werden. Anschließend werden die in Tabelle 1 angegebenen Mengen der nach Synthesebeispiel 4 hergestellten Dispersionen zugegeben. Dabei werden jeweils molare Verhältnisse von geschützten Isocyanatfunktionen zu Hydroxylgruppen von ca. 1,1 : 1 erreicht. Des Weiteren werden jeweils 0,01 g einer Dibutylzinndilaurat und 0,03 g einer 10 %igen Lösung ADDID® 100 der Fa. TEGO AG (Verlaufshilfsmittel auf Polysiloxanbasis) in Isopropanol zugemischt, wodurch Beschichtungsformulierungen mit ca. 50 % Festgehalt erhalten werden. Diese anfänglich noch leicht trüben Mischungen werden für 4 h bei Raumtemperatur gerührt, wobei klare Beschichtungsformulierungen erhalten werden.

**Tabelle 1: Rezepturen der Lacke (Vergleichsbeispiele 1-2)**

| | Polyacrylpolyol | Desmodur® BL 3175 SN | Nanosol nach Synthesebsp. 4 | Partikelgehalt* |
|---|---|---|---|---|
| Vergleichsbeispiel 1¹⁾ | 4,50 g | 2,73 g | (0,0 g) | 0,0 % |
| Vergleichsbeispiel 2¹⁾ | 4,50 g | 2,76 g | 2,76 g | 3,9 % |

| | | | | |
|---|---|---|---|---|
| * Anteil der Partikel nach Synthesebeispiel 4 am gesamten Feststoffgehalt der jeweiligen Lackformulierung ¹⁾ nicht erfindungsgemäss | | | | |

### Beispiele 1-4: Herstellung von 1K-Beschichtungsformulierungen enthaltend SiO₂-Nanosol-Partikel, die mit Carbaminfunktionen modifiziert worden sind

Zur Herstellung einer erfindungsgemäßen Beschichtungsformulierung wird ein acrylatbasierendes Lackpolyol mit einem Festgehalt von 52,4 Gew.-% (Lösemittel: Solvent Naphta, Methoxypropylacetat (10:1)), einem Hydroxylgruppengehalt von 1,46 mmol/g Harzlösung und einer Säurezahl von 10 - 15 mg KOH/g mit Desmodur® BL 3175 SN der Fa. Bayer (butanoxim-blockiertes Polyisocyanat, blockierter NCO-Gehalt von 2,64 mmol/g) vermischt. Die dabei eingesetzten Mengen der jeweiligen Komponenten können der Tabelle 2 entnommen werden. Anschließend werden die in Tabelle 2 angegebenen Mengen der nach Synthesebeispiel 5 bzw. 6 (siehe Tabelle 2) hergestellten Dispersion zugegeben. Dabei werden jeweils molare Verhältnisse von geschützten Isocyanatfunktionen zu Hydroxyl- bzw. Amingruppen von ca. 1,1 : 1 erreicht. Des Weiteren werden jeweils 0,01 g einer Dibutylzinndilaurat und 0,03 g einer 10 %-igen Lösung ADDID® 100 der Fa. TEGO AG (Verlaufshilfsmittel auf Polysiloxanbasis) in Isopropanol zugemischt, wodurch Beschichtungsformulierungen mit ca. 50 % Festgehalt erhalten werden. Diese anfänglich noch leicht trüben Mischungen werden für 4 h bei Raumtemperatur gerührt, wobei klare Beschichtungsformulierungen erhalten werden.

**Tabelle 2: Rezepturen der Lacke (Beispiel 1-4)**

| | Polyacrylpolyol | Desmodur® BL 3175 SN | Nanosol nach | Partikelgehalt* |
|---|---|---|---|---|
| Beispiel 1 | 4,50 g | 2,75 g | Synthesebsp. 5 (0,62 g) | 1,4% |
| Beispiel 2 | 4,50 g | 2,76 g | Synthesebsp. 5 (1,25 g) | 2,7% |
| Beispiel 3 | 4,00 g | 2,44 g | Synthesebsp. 6 (0, 60 g) | 1,5% |
| Beispiel 4 | 4,00 g | 2,45 g | Synthesebsp. 6 (1,20 g) | 2,9% |

| | | | | |
|---|---|---|---|---|
| * Anteil der Partikel nach Synthesebeispiel 5 bzw. 6 am gesamten Festgehalt der jeweiligen Lackformulierung | | | | |

### Beispiele 5 - 6: Herstellung von 1R-Heschichtungsformulierungen enthaltend pyrogene Kieselsäure-Partikel, die mit Carbaminfunktionen modifiziert worden sind

Zur Herstellung einer erfindungsgemäßen Beschichtung werden 85,6 g Desmophen® A 365 BA/X der Fa. Bayer (acrylatbasierendes Lackpolyol mit einem Hydroxylgruppengehalt von 1,71 mmol OH/g) mit 63,3 g Desmodur® BL 3175 SN der Fa. Bayer (Methylethylketonoxim-blockiertes Polyisocyanat, blockierter NCO-Gehalt ca. 11 %) vermischt. Dies entspricht einem molaren Verhältnis von geschützten Isocyanatfunktionen zu Hydroxylgruppen von 1,1 : 1. Des Weiteren werden 0,5 g einer 50 %igen Dibutylzinndilauratlösung (in Methylethylketon) und 0,1 g ADDID® 100 der Fa. TEGO AG (Verlaufshilfsmittel auf Polysiloxanbasis) sowie 31,5 g Methylethylketon zugemischt, wodurch eine Beschichtungsformulierung mit ca. 50 % Festgehalt erhalten wird.

Beispiel 5: In die so erhaltene Mischung werden mittels eines Dissolvers 18 g der aus Synthese-Beispielen 7 erhaltenen, mit Carbamin-Gruppen modifizierten, pyrogenen Kieselsäure eingearbeitet und anschließend in einer Perlmühle 30 Min. feindispergiert, wobei eine klare Beschichtungsformulierung erhalten wird.

Beispiel 6: In die so erhaltene Mischung werden mittels eines Dissolvers 18 g der aus Synthese-Beispielen 8 erhaltenen, mit Carbamin-Gruppen modifizierten, pyrogenen Kieselsäure eingearbeitet und anschließend in einer Perlmühle 30 min feindispergiert, wobei eine klare Beschichtungsformulierung erhalten wird.

### Herstellung und Bewertung von Lackfilmen aus den Lackformulierungen der Beispiele 1 - 6 und der Vergleichsbeispiele 1 - 2.

Die Beschichtungsmassen aus dem Vergleichsbeispiel 1 sowie den Beispielen 1 - 4 werden jeweils mittels eines Filmziehgerätes Coatmaster® 509 MC der Fa. Erichsen mit einem Rakel der Spalthöhe 120 µm auf einer Glasplatte aufgerakelt. Anschließend werden die erhaltenen Beschichtungsfilme in einem Umlufttrockenschrank für 30 Minuten bei 70°C und anschließend für 30 Min. bei 150°C getrocknet. Sowohl aus den Lackformulierungen der Beispiele als auch aus den Vergleichsbeispielen werden optisch einwandfreie, glatte Beschichtungen erhalten.

Der Glanz der Beschichtungen wird mit einem Glanzmessgerät Micro gloss 20° der Fa. Byk bestimmt und liegt bei allen Lackformulierung zwischen 159 und 164 Glanz-Einheiten. Die Kratzfestigkeit der so erzeugten ausgehärteten Lackfilme wird mit einem Scheuerprüfgerät nach Peter-Dahn ermittelt. Hierzu wird ein Scheuervlies Scotch Brite® 2297 mit einer Fläche von 45 x 45 mm mit einem Gewicht von 500 g beschwert. Mit diesem werden die Lackproben mit insgesamt 50 Hüben verkratzt. Sowohl vor Beginn als auch nach Beendigung der Kratzversuche wird der Glanz der jeweiligen Beschichtung mit einem Glanzmessgerät Micro gloss 20° der Fa. Byk gemessen.

Als Maß für die Kratzfestigkeit der jeweiligen Beschichtung wird der Glanzverlust im Vergleich zum Ausgangswert bestimmt:

**Tabelle 3: Glanzverlust beim Kratztest nach Peter-Dahn**

| Lackprobe | Glanzverlust |
|---|---|
| Vergleichsbeispiel 1¹⁾ | 72% |
| Vergleichsbeispiel 2¹⁾ | 61% |
| Beispiel 1 | 46% |
| Beispiel 2 | 41% |
| Beispiel 3 | 45% |
| Beispiel 4 | 31% |
| Beispiel 5 | 25% |
| Beispiel 6 | 29% |

| | |
|---|---|
| ¹⁾ nicht erfindungsgemäß | |

### Beispiele 7 - 8 und Vergleichsbeispiel 3: Herstellung von 2K-Beschichtungsformulierungen enthaltend SiO₂-Nanosol-Partikel, die mit Carbaminfunktionen modifiziert worden sind

Zur Herstellung einer Beschichtungsformulierung wird ein acrylatbasierendes Lackpolyol mit einem Festgehalt von 52,4 Gew.-% (Lösemittel: Solvent Naphta, Methoxypropylacetat (10:1)), einem Hydroxylgruppengehalt von 1,46 mmol/g Harzlösung und einer Säurezahl von 10-15 mg KOH/g mit dem nach Synthesebeispiel 6 hergestellten Nanosol vermischt. Die dabei eingesetzten Mengen der jeweiligen Komponenten sind in Tabelle 4 angegeben. Die erhaltene, anfänglich noch leicht trübe Dispersion wird für ca. 2 h bei Raumtemperatur gerührt, wobei klare und lagerstabile Mischung erhalten wird.

Direkt vor ihrer Verwendung wird diese Lackharzkomponente mit Desmodur® BL 3390 BA/SN der Fa. Bayer (Polyisocyanat, NCO-Gehalt von 4,63 mmol/g) als Härterkomponente vermischt. Die dabei eingesetzten Mengen der jeweiligen Komponenten können der Tabelle 4 entnommen werden. Es werden jeweils molare Verhältnisse von Isocyanatfunktionen zu Hydroxyl- bzw. Amingruppen von ca. 1,1 : 1 erreicht. Des Weiteren werden jeweils 0,01 g einer Dibutylzinndilaurat und 0,03 g einer 10 %-igen Lösung ADDID® 100 der Fa. TEGO AG (Verlaufshilfsmittel auf Polysiloxanbasis) in Isopropanol zugemischt, wodurch Beschichtungsformulierungen mit ca. 50 % Festgehalt erhalten werden.

**Tabelle 4: Rezepturen der Lacke (Beispiel 1 - 4)**

| | Polyacrylpolyol | Desmodur® BL 3175 SN | Nanosol nach Synthesebsp. 6 | Partikelgehalt* |
|---|---|---|---|---|
| Vergleichsbeispiel 3¹⁾ | 4,00 g | 1,39 g | 0,00 g | 0,0 % |
| Beispiel 7 | 4,00 g | 1,39 g | 0,55 g | 1,6 % |
| Beispiel 8 | 4,00 g | 1,40 g | 1,10 g | 3,2 % |

| | | | | |
|---|---|---|---|---|
| * Anteil der Partikel nach Synthesebeispiel 5 bzw. 6 am gesamten Festgehalt der jeweiligen Lackformulierung ¹⁾ nicht erfindungsgemäß | | | | |

### Herstellung und Bewertung von Lackfilmen aus den Lackformulierungen der Beispiele 7 - 8 und des Vergleichsbeispiels 3.

Direkt nach dem jeweiligen Vermengen von Lackharz- und Lackhärterkomponente werden die Beschichtungsmassen aus dem Vergleichsbeispiel 3 sowie den Beispielen 7 - 8 mittels eines Filmziehgerätes Coatmaster® 509 MC der Fa. Erichsen mit einem Rakel der Spalthöhe 120 µm auf einer Glasplatte aufgerakelt. Anschließend werden die erhaltenen Beschichtungsfilme in einem Umlufttrockenschrank für 30 Minuten bei 80°C getrocknet. Sowohl aus den Lackformulierungen der Beispiele 7 - 8 als auch derjenigen des Vergleichsbeispiels 3 werden optisch einwandfreie, glatte Beschichtungen erhalten.

Der Glanz der Beschichtungen wird mit einem Glanzmessgerät Micro gloss 20° der Fa. Byk bestimmt und liegt bei allen Lackformulierung zwischen 159 und 164 Glanz-Einheiten. Die Kratzfestigkeit der so erzeugten ausgehärteten Lackfilme wird mit einem Scheuerprüfgerät nach Peter-Dahn ermittelt. Hierzu wird ein Scheuervlies Scotch Brite® 2297 mit einer Fläche von 45 x 45 mm mit einem Gewicht von 500 g beschwert. Mit diesem werden die Lackproben mit insgesamt 50 Hüben verkratzt. Sowohl vor Beginn als auch nach Beendigung der Kratzversuche wird der Glanz der jeweiligen Beschichtung mit einem Glanzmessgerät Micro gloss 20° der Fa. Byk gemessen.

Als Maß für die Kratzfestigkeit der jeweiligen Beschichtung wird der Glanzverlust im Vergleich zum Ausgangswert bestimmt:

**Tabelle 5: Glanzverlust beim Kratztest nach Peter-Dahn**

| Lackprobe | Glanzverlust |
|---|---|
| Vergleichsbeispiel 3¹⁾ | 82 % |
| Beispiel 7 | 47 % |
| Beispiel 8 | 41 % |

| | |
|---|---|
| ¹⁾ nicht erfindungsgemäß | |

## Patentansprüche

1. Beschichtungsformulierungen (B), die enthalten
a) 20 - 90 Gew.-%, bezogen auf den Feststoffanteil, eines hydroxylgruppen-funktionellen Lackharzes (L),
b) 1 - 90 Gew.-%, bezogen auf den Feststoffanteil, eines Lackhärters (H), der freie und/oder geschützte Isocyanatgruppen enthält, die bei thermischer Behandlung unter Abspaltung einer Schutzgruppe eine Isocyanatfunktion freisetzen,
c) 0,05 - 40 Gew.-%, bezogen auf den Feststoffanteil, an Partikeln (P), die auf ihrer Oberfläche über isocyanatreaktive Funktionen verfügen, wobei mehr als 50 % der reaktiven Funktionen der Partikel (P) über eine höhere Reaktivität gegenüber Isocyanaten verfügen, als mindestens 60 % der Hydroxylgruppen des Lackharzes (L) und
d) 0 - 90 Gew.-%, bezogen auf die gesamte Beschichtungsformulierung (B), eines Lösungsmittels oder eines Lösungsmittelgemisches.

2. Beschichtungsformulierungen (B) nach Anspruch 1, bei denen die Partikel (P) über kohlenstoffgebundene Aminfunktionen oder Thiolfunktionen verfügen.

3. Beschichtungsformulierungen (B) nach Anspruch 1 und 2, welche
a) 30 - 80 Gew.-%, bezogen auf den Feststoffanteil, eines hydroxylgruppen-funktionellen Lackharzes (L),
b) 10 - 60 Gew.-%, bezogen auf den Feststoffanteil, eines Lackhärters (H),
c) 0,1 - 30 Gew.-%, bezogen auf den Feststoffanteil, an Partikeln (P),
d) 0 - 40 Gew.-% bezogen auf den Feststoffanteil, eines oder mehrerer weiter Lackhärter (H1) und
e) 20 - 70 Gew.-%, bezogen auf die gesamte Beschichtungsformulierung (B), eines oder mehrerer Lösungsmittel aufweisen.

4. Beschichtungsformulierungen (B) nach Anspruch 1 bis 3, bei denen die Partikel (P) erhältlich sind durch eine Umsetzung von Partikeln (P1), die aus Atomen, die ausgewählt werden aus Metall-, Silicium- und Sauerstoffatomen, oder aus Siliconharzen bestehen und über freie Hydroxylfunktionen verfügen, mit Organosilanen (A), die aus den allgemeinen Formel (I) und (II)
(R¹O)₃₋ₙ(R²)ₙSi-A-X (I) 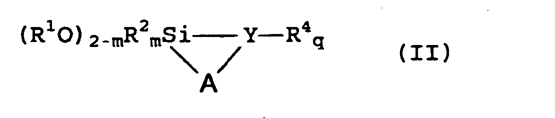
ausgewählt werden, wobei
**R¹** Wasserstoff, Alkyl-, Cycloalkyl- oder Arylreste mit jeweils 1 bis 6 C-Atomen, wobei die Kohlenstoffkette durch nicht benachbarte Sauerstoff-, Schwefel- oder NR³-Gruppen unterbrochen sein kann,
**R²** Alkyl-, Cycloalkyl-, Aryl- oder Arylalkylreste mit jeweils 1 bis 12 C-Atomen, wobei die Kohlenstoffkette durch nicht benachbarte Sauerstoff-, Schwefel- oder NR³-Gruppen unterbrochen sein kanne,
**R⁴** Wasserstoff oder einen Alkylrest mit 1 - 10 Kohlenstoffatomen,
**A** einen zweibindigen, gegebenenfalls substituierten Alkyl-, Cycloalkyl- oder Arylrest mit 1-10 Kohlenstoffatomen, der gegebenenfalls durch Sauerstoff-, Schwefel- oder NR³-Gruppen unterbrochen sein kann,
**X** eine Hydroxyl- oder Thiolfunktion, eine Gruppe der Formel **NHR⁷**, einen heterocyclischen Ring enthaltend eine NH-Funktion oder einen Epoxidring,
Y eine Organofunktion, die nach der Spaltung der Si-Y-Bindung eine Hydroxyl- oder Thiolfunktion oder eine Gruppe der Formel **NHR⁷** darstellt,
**R³, R⁷** Wasserstoff, Alkyl-, Cycloalkyl-, Aryl-, Arylalkyl-, Aminoalkyl- oder Aspartatesterreste bedeuten und,
**n** die Werte 0, 1 oder 2,
**m** die Werte 0, 1 oder 2 und
**q** die Werte 0 oder 1 annehmen können.

5. Beschichtungsformulierungen (B) nach Anspruch 1 bis 4 bei denen die Partikel (P1) einen mittleren Durchmesser von 1 nm bis 100 µm besitzen.

6. Beschichtungsformulierungen (B) nach Anspruch 1 bis 5, bei denen bei der Herstellung der Partikel (P) von Partikel (P1) ausgegangen wird, die aus kolloidalen Silicium- oder Metalloxiden bestehen.

7. Beschichtungsformulierungen (B) nach Anspruch 1 bis 6, bei denen zur Herstellung der Partikel (P) von Partikel (P1) ausgegangen wird, die aus pyrogener Kieselsäure bestehen.

8. Beschichtungsformulierungen (B) nach Anspruch 1 bis 7, bei denen die Lackharze (L) aus hydroxylgruppen-haltigen Polyacrylaten oder Polyestern bestehen.

9. Verwendung der Beschichtungsformulierung (B) gemäß Anspruch 1 bis 8 als Lacke.

## Claims

1. Coating formulations (B) which comprise
a) 20%-90% by weight, based on the solids fraction, of a hydroxyl-functional film-forming resin (L),
b) 1%-90% by weight, based on the solids fraction, of a coating curative (A) which contains free and/or protected isocyanate groups which on thermal treatment eliminate a protective group to release an isocyanate function,
c) 0.05%-40% by weight, based on the solids fraction, of particles (P) which on their surface possess isocyanate-reactive functions, with more than 50% of the reactive functions of the particles (P) possessing a greater reactivity toward isocyanates than do at least 60% of the hydroxyl groups of the film-forming resin (L), and
d) 0%-90% by weight, based on the overall coating formulation (B), of a solvent or a solvent mixture.

2. Coating formulations (B) according to Claim 1, in which the particles (P) possess carbon-bonded amine functions or thiol functions.

3. Coating formulations (B) according to Claim 1 and 2, which have
a) 30%-80% by weight, based on the solids fraction, of a hydroxyl-functional film-forming resin (L),
b) 10%-60% by weight, based on the solids fraction, of a coating curative (H),
c) 0.1%-30% by weight, based on the solids fraction, of particles (P),
d) 0%-40% by weight, based on the solids fraction, of one or more further coating curatives (H1), and
e) 20%-70% by weight, based on the overall coating formulation (B), of one or more solvents.

4. Coating formulations (B) according to Claim 1 to 3, in which the particles (P) are obtainable by reacting particles (P1) composed of atoms selected from metal atoms, silicon atoms, and oxygen atoms, or of silicone resins, and possessing free hydroxyl functions with organosilanes (A) selected from the general formulae (I) and (II)
(R¹O) ₃₋ₙ (R²) ₙSi-A-X (I) 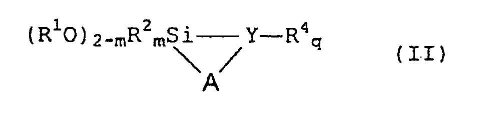
where
**R¹** denotes hydrogen or alkyl, cycloalkyl or aryl radicals having in each case 1 to 6 C atoms, it being possible for the carbon chain to be interrupted by nonadjacent oxygen, sulphur or **NR³** groups,
**R²** denotes alkyl, cycloalkyl, aryl or arylalkyl radicals having in each case 1 to 12 C atoms, it being possible for the carbon chain to be interrupted by nonadjacent oxygen, sulphur or **NR³** groups,
**R⁴** denotes hydrogen or an alkyl radical having 1-10 carbon atoms,
**A** denotes a divalent, optionally substituted alkyl, cycloalkyl or aryl radical having 1-10 carbon atoms, which optionally may be interrupted by oxygen, sulphur or NR³ groups,
**X** denotes a hydroxyl or thiol function, a group of formula NHR⁷, a heterocyclic ring containing an NH function, or an epoxide ring,
**Y** denotes an organic function which after the cleavage of the Si-Y bond represents a hydroxyl or thiol function or a group of formula NHR⁷,
**R³, R⁷** denote hydrogen or alkyl, cycloalkyl, aryl, arylalkyl, aminoalkyl or aspartate ester radicals, and
**n** is able to adopt the values 0, 1 or 2,
**m** is able to adopt the values 0, 1 or 2, and
**q** is able to adopt the values 0 or 1.

5. Coating formulations (B) according to Claim 1 to 4, in which the particles (P1) possess an average diameter of 1 nm to 100 µm.

6. Coating formulations (B) according to Claim 1 to 5, in which the particles (P) are prepared starting from particles (P1) which are composed of colloidal silicon oxides or metal oxides.

7. Coating formulations (B) according to Claim 1 to 6, in which the particles (P) are prepared starting from particles (P1) which are composed of fumed silica.

8. Coating formulations (B) according to Claim 1 to 7, in which the film-forming resins (L) are composed of hydroxyl-containing polyacrylates or poly-esters.

9. Use of the coating formulation (B) according to Claim 1 to 8 as coating materials.

## Revendications

1. Compositions de revêtement (B) qui contiennent
a) 20 - 90 % en poids, par rapport à la quantité de matière solide, d'une résine pour peinture (L) à fonctions hydroxy,
b) 1 - 90 % en poids, par rapport à la quantité de matière solide, d'un durcisseur pour peinture (H) qui contient des groupes isocyanate libres et/ou protégés qui lors d'un traitement thermique libèrent une fonction isocyanate avec séparation d'un groupe protecteur,
c) 0, 05 - 40 % en poids, par rapport à la quantité de matière solide, de particules (P) qui sont dotés sur leur surface de fonctions réactives avec des isocyanates, plus de 50 % des fonctions réactives des particules (P) étant dotées d'une plus forte réactivité à l'égard d'isocyanates qu'au moins 60 % des groupes hydroxy de la résine pour peinture (L) et
d) 0 - 90 % en poids, par rapport à la composition de revêtement totale (B), d'un solvant ou d'un mélange de solvants.

2. Compositions de revêtement (B) selon la revendication 1, dans lesquelles les particules (P) sont dotées de fonctions thiol ou de fonctions amino liées au carbone.

3. Compositions de revêtement (B) selon les revendications 1 et 2, qui comportent
a) 30 - 80 % en poids, par rapport à la quantité de matière solide, d'une résine pour peinture (L) à fonctions hydroxy,
b) 10 - 60 % en poids, par rapport à la quantité de matière solide, d'un durcisseur pour peinture (H),
c) 0,1 - 30 % en poids, par rapport à la quantité de matière solide, de particules (P),
d) 0 - 40 % en poids, par rapport à la quantité de matière solide, d'un ou plusieurs autres durcisseurs pour peinture (H1) et
e) 20 - 70 % en poids, par rapport à la composition de revêtement totale (B), d'un ou plusieurs solvants.

4. Compositions de revêtement (B) selon l'une quelconque des revendications 1 à 3, dans lesquelles les particules (P) peuvent être obtenues par une mise en réaction de particules (P1), qui consistent en atomes qui sont choisis parmi les atomes de métaux, de silicium et d'oxygène, ou en résines silicone et sont dotées de fonctions hydroxy libres, avec des organosilanes (A) qui sont choisis parmi les formules générales (I) et (II)
(R¹O)₃₋ₙ(R²)ₙSi-A-X (I) 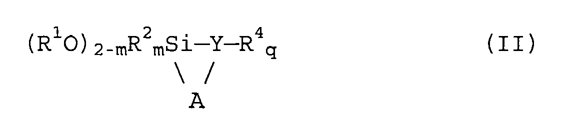
dans lesquelles
R¹ représente un atome d'hydrogène, des radicaux alkyle, cycloalkyle ou aryle ayant chacun de 1 à 6 atomes de carbone, la chaîne carbonée pouvant être interrompue par des atomes d'oxygène ou de soufre ou des groupes NR³, non contigus,
R² représente des radicaux alkyle, cycloalkyle, aryle ou arylalkyle ayant chacun de 1 à 12 atomes de carbone, la chaîne carbonée pouvant être interrompue par des atomes d'oxygène ou de soufre ou des groupes NR³, non contigus,
R⁴ représente un atome d'hydrogène ou un radical alkyle ayant de 1 à 10 atomes de carbone,
A représente un radical alkyle, cycloalkyle ou aryle ayant 1-10 atomes de carbone, à deux liaisons, éventuellement substitué, qui peut éventuellement être interrompu par des atomes d'oxygène ou de soufre ou des groupes NR³,
X représente une fonction hydroxy ou thiol, un groupe de formule NHR⁷, un cycle hétérocyclique contenant une fonction NH ou un cycle époxy,
Y représente une fonction organique qui, après la coupure de la liaison Si-Y, représente une fonction hydroxy ou thiol ou un groupe de formule NHR⁷,
R³, R⁷ représentent un atome d'hydrogène, des radicaux alkyle, cycloalkyle, aryle, arylalkyle, aminoalkyle ou ester aspartate, et
n peut avoir la valeur 0, 1 ou 2
m peut avoir la valeur 0, 1 ou 2 et
q peut avoir la valeur 0 ou 1

5. Compositions de revêtement (B) selon l'une quelconque des revendications 1 à 4, dans lesquelles les particules (P1) ont un diamètre moyen de 1 nm à 100 µm.

6. Compositions de revêtement (B) selon l'une quelconque des revendications 1 à 5, dans lesquelles, dans la préparation des particules (P) on part de particules (P1) qui consistent en des oxydes métalliques ou de silicium colloïdaux.

7. Compositions de revêtement (B) selon l'une quelconque des revendications 1 à 6, dans lesquelles, dans la préparation des particules (P) on part de particules (P1) qui consistent en acide silicique pyrogéné.

8. Compositions de revêtement (B) selon l'une quelconque des revendications 1 à 7, dans lesquelles les résines pour peintures (L) consistent en des polyesters ou des polyacrylates contenant des groupes hydroxy.

9. Utilisation de la composition de revêtement (B) selon l'une quelconque des revendications 1 à 8, en tant que peintures.
